# EUROPEAN PATENT APPLICATION

(11) **EP 3 961 412 A1**
(43) Date of publication of application: **02.03.2022**
(21) Application number: 20795638.4
(22) Date of filing: 24.04.2020
(51) Int. Cl.: G06F 16/182

(54) **CONTROL METHOD, DATA GENERATION DEVICE, AND PROGRAM**

(30) Priority: 25.04.2019 US 201962838436 P
(71) Applicant: Panasonic Intellectual Property Corporation of America, Torrance, CA 90504 (US)
(72) Inventor: NISHIDA, Naohisa, Osaka-shi, Osaka 540-6207 (JP); UNAGAMI, Yuji, Osaka-shi, Osaka 540-6207 (JP); MICHIYAMA, Junji, Osaka-shi, Osaka 540-6207 (JP)
(74) Representative: Vigand, Philippe
(86) International application number: PCT/JP2020/017789
(87) International publication number: WO 2020/218550

(57) **Abstract**

A control method includes: generating first transaction data including latest information acquired by a first time, and transmitting the first transaction data to a first server that is one of a plurality of servers (S10); checking content of a block recorded in a distributed ledger of the first server at a second time that happens one or more times after the first time to determine, when second transaction data next to the first transaction data is generated at the second time, whether a first block included when the first transaction data is recorded into the distributed ledger is different from a second block included when the second transaction data is recorded into the distributed ledger (S11); and when it is determined that the first block is different from the second block (Yes in S12), generating, at the second time or thereafter, the second transaction data that includes latest information acquired after the first time, and transmitting the second transaction data to the first server (S13).

## Description

### [Technical Field]

The present disclosure relates to a control method, a data generation device, and a program.

### [Background Art]

Blockchain is known as a technology that is based on Bitcoin (see, for example, NPL 1). The blockchain is a database that generates units of data called blocks at a regular time interval, connects the blocks in the form of a chain, and stores the data. By using the blockchain, a transaction history (transaction data) is shared in a peer-to-peer (P2P) network in which anyone can participate, and mutually monitored by the participants, whereby reliability can be secured, and tampering of the data can be prevented.

Non Patent Literature (NPL) 1 discloses a bitcoin blockchain, wherein the block size is limited to 1 MB, and the time interval of block generation is set to about 10 minutes.

For this reason, the amount of data processed is increased by changing the specifications of the blockchain and setting the time interval of block generation to about 2 minutes (see, for example, Non Patent Literature (NPL) 2).

### [Citation List]

### [Non Patent Literature]

[NPL 1] Satoshi Nakamoto, "Bitcoin: A Peer-to-Peer Electronic Cash System", 2009
[NPL 2] Bitcoin Candy, "Bitcoin Candy Whitepaper", (https://cdy.one/whitepaper.pdf)

### [Summary of Invention]

### [Technical Problem]

In the blockchain disclosed in each of NPL 1 and NPL 2, one block that includes a plurality of transaction data items is generated. For this reason, depending on the time interval of block generation, a plurality of transaction data items transmitted at a plurality of points in time from the same user or the same business operator may be included in one block.

However, there may be a case where it is meaningless to include, in one block, a plurality of transaction data items transmitted at a plurality of points in time from the same user or the same business operator depending on the type of information included in the transaction data items. An example of this case is where despite the fact that the price is determined based only on latest weather information recorded into the blockchain, weather information other than the latest weather information is also included in one block, or in other words, where only a transaction data item that includes latest information is used from among the plurality of transaction data items included in the block, and a transaction data item that includes past information is not used. In this case, unnecessary transaction data that is not used remains recorded into the block of the blockchain. As a result, not only a limited network bandwidth is wasted, but also resources including electric power for block generation and the like are wasted.

The present disclosure has been made in view of the circumstances described above, and it is an object of the present disclosure to provide a control method and the like, with which the waste of network bandwidth and resources can be suppressed.

### [Solution to Problem]

In order to achieve the above-described object, a control method according to an aspect of the present disclosure is a control method executed by a device in a system including the device and a plurality of servers that are communicably connected to the device, the plurality of servers recording, every predetermined timing, a transaction data item selected from among transaction data items stored by the predetermined timing into a distributed ledger by incorporating the transaction data item into a block, the control method including: generating first transaction data that includes latest information acquired by a first time, and transmitting the first transaction data to a first server that is one of the plurality of servers; checking content of the block recorded in the distributed ledger of the first server at a second time that happens one or more times after the first time to determine, when second transaction data next to the first transaction data is generated at the second time, whether a first block that is included when the first transaction data is recorded into the distributed ledger is different from a second block that is included when the second transaction data is recorded into the distributed ledger; and when it is determined that the first block is different from the second block, generating, at the second time or thereafter, the second transaction data that includes latest information acquired after the first time, and transmitting the second transaction data to the first server.

Generic or specific aspects of the present disclosure may be implemented by a system, an integrated circuit, a computer program or a computer readable recording medium such as a CD-ROM, or may be implemented by any combination of a system, a method, an integrated circuit, a computer program, and a recording medium.

### [Advantageous Effects of Invention]

With the control method and the like of the present disclosure, the waste of network bandwidth and resources can be suppressed.

### [Brief Description of Drawings]

[FIG. 1]

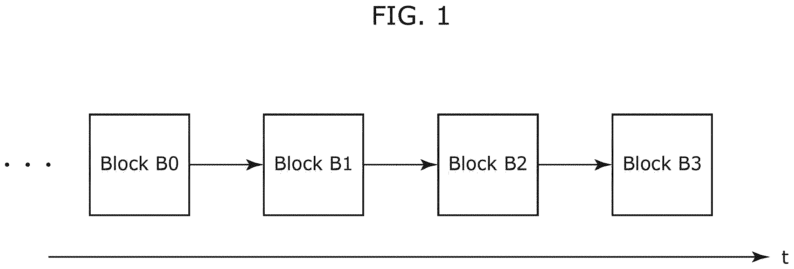

   FIG. 1 is a diagram illustrating the concept of a blockchain.
[FIG. 2]

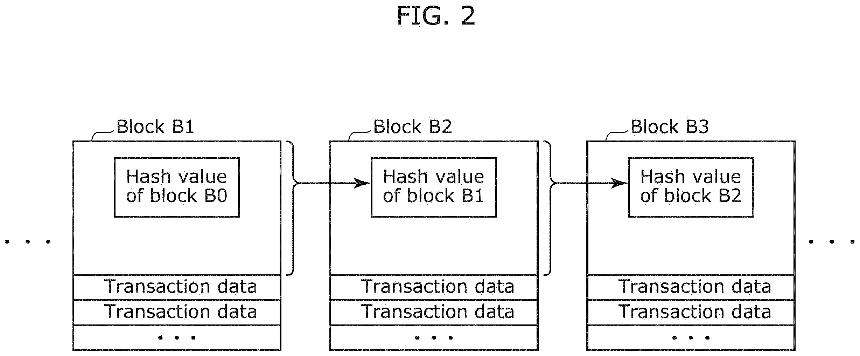

   FIG. 2 is a diagram illustrating a data structure of the blockchain shown in FIG. 1.
[FIG. 3]

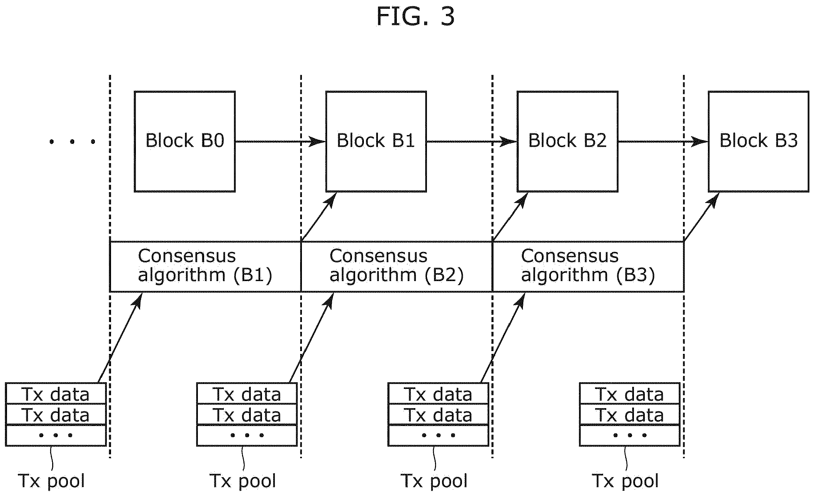

   FIG. 3 is a diagram illustrating processing performed at a time interval of block generation of the blockchain shown in FIG. 1.
[FIG. 4]

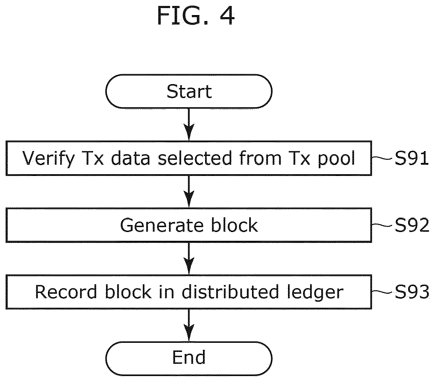

   FIG. 4 is an example of a flowchart illustrating processing performed by a consensus algorithm shown in FIG. 3 being executed.
[FIG. 5]

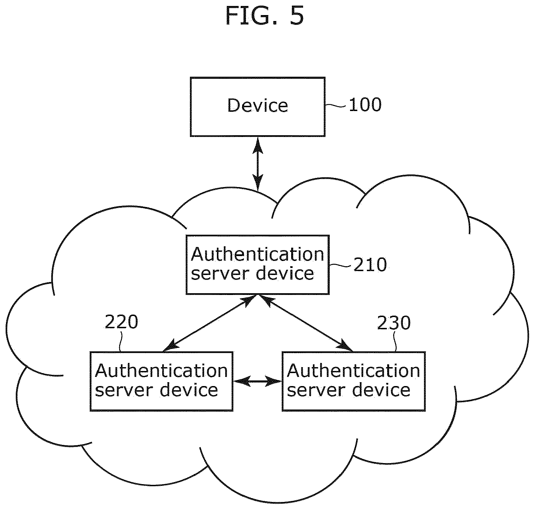

   FIG. 5 is a diagram schematically showing a configuration of a control system according to an embodiment.
[FIG. 6]

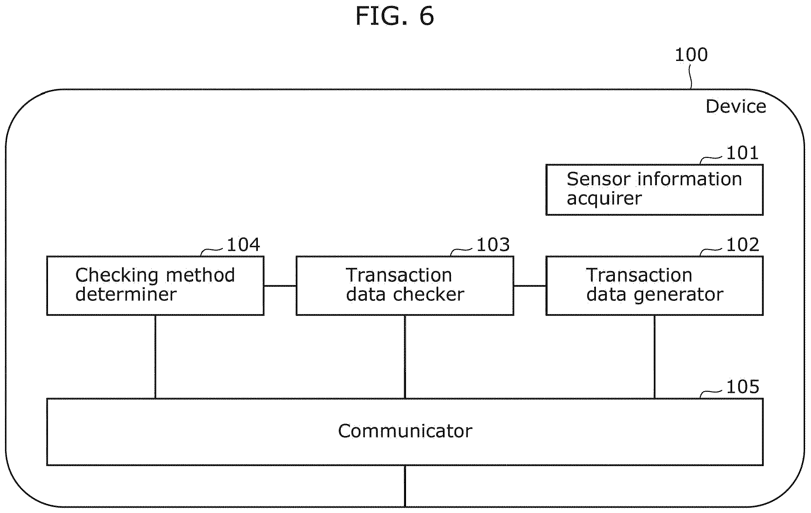

   FIG. 6 is a block diagram schematically showing a configuration of a device according to the embodiment.
[FIG. 7]

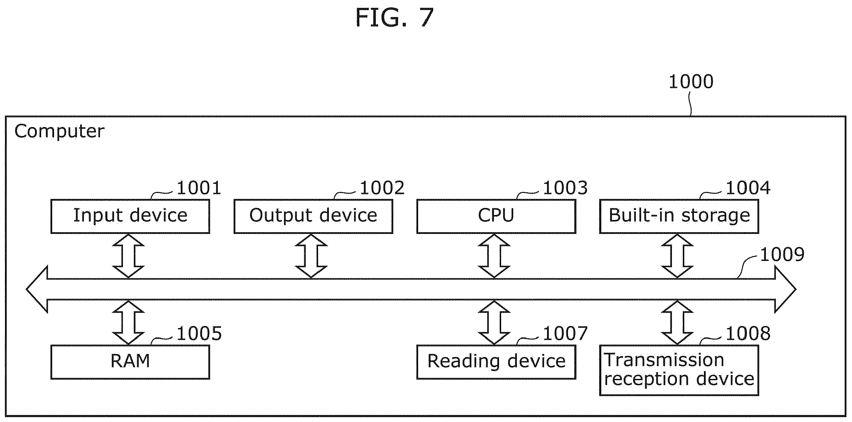

   FIG. 7 is a diagram showing an example of a hardware configuration of a computer that implements the functions of the device according to the embodiment by using software.
[FIG. 8]

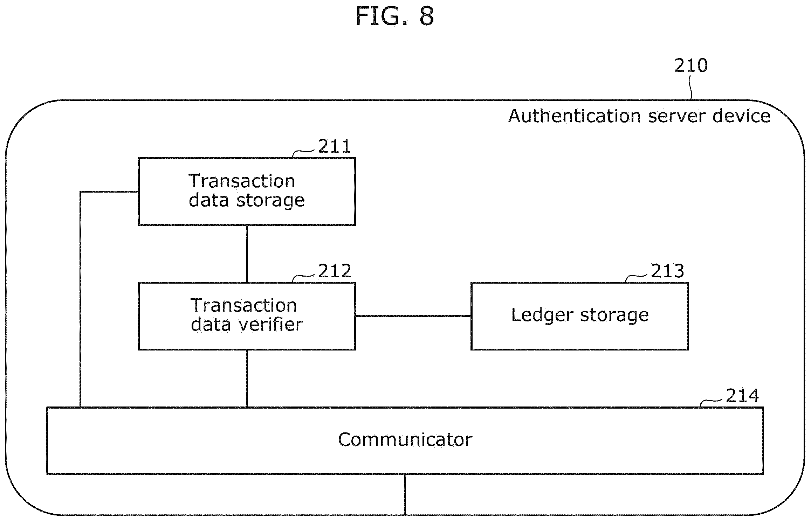

   FIG. 8 is a block diagram showing a functional configuration of an authentication server device according to the embodiment.
[FIG. 9]

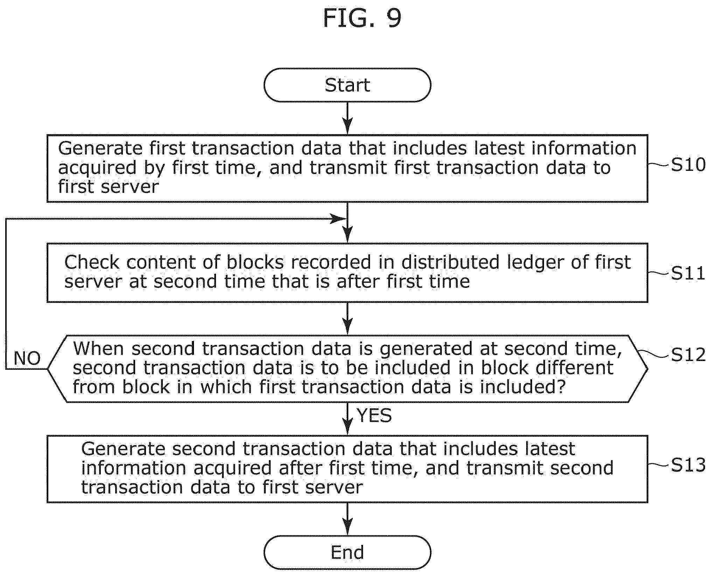

   FIG. 9 is a flowchart illustrating the operations of the device according to the embodiment.
[FIG. 10]

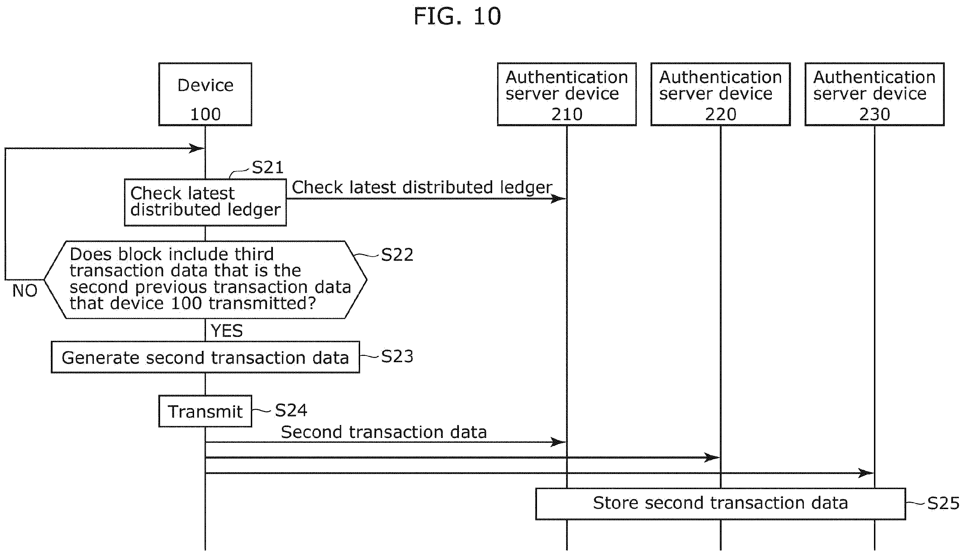

   FIG. 10 is a sequence diagram of processing performed by a control system according to Example 1.
[FIG. 11]

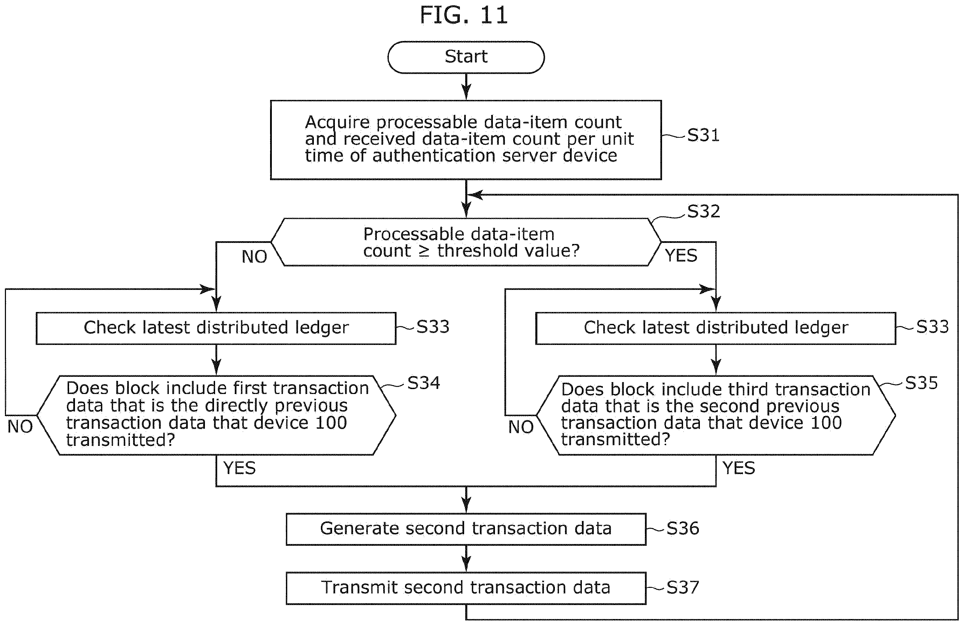

   FIG. 11 is a flowchart illustrating processing performed by a device according to Example 2.
[FIG. 12]

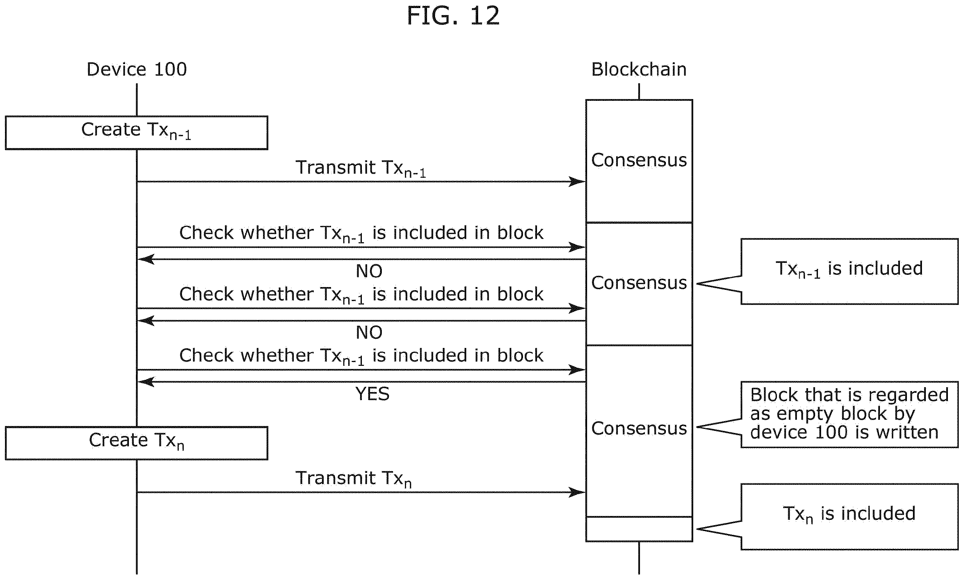

   FIG. 12 is a flow diagram illustrating an advantageous effect of the embodiment.
[FIG. 13]

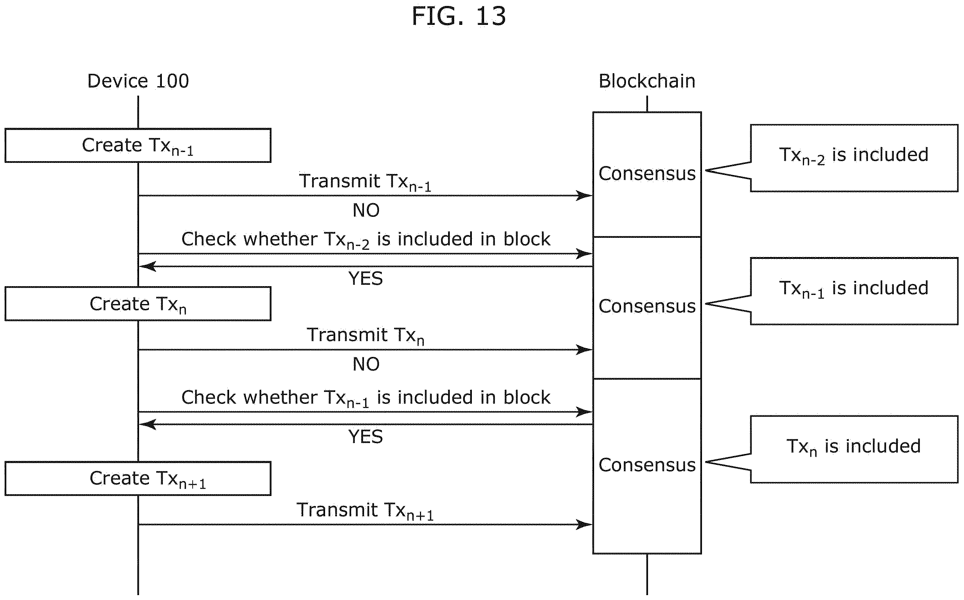

   FIG. 13 is a flow diagram illustrating an advantageous effect of the embodiment.
[FIG. 14]

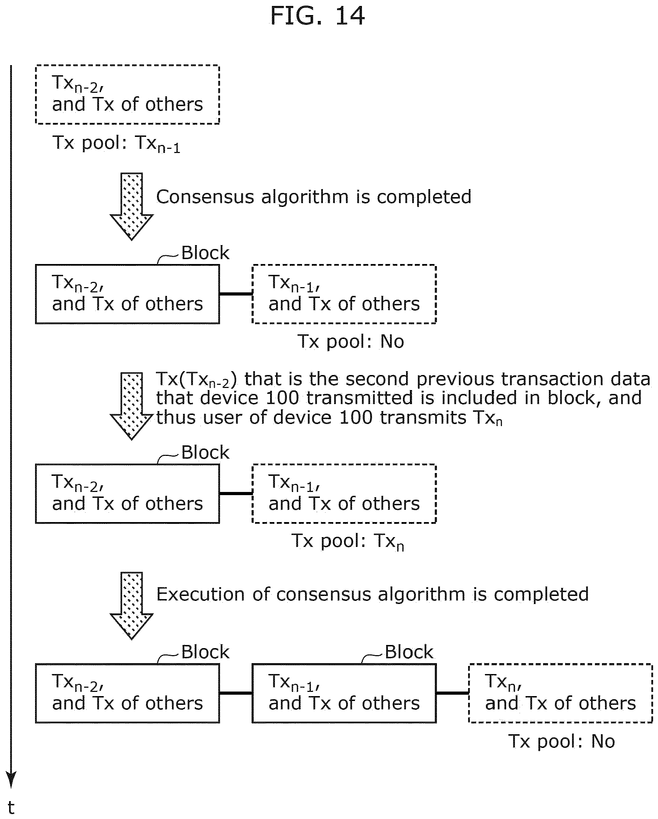

   FIG. 14 is a diagram illustrating the flow diagram shown in FIG. 13 from another viewpoint.

### [Description of Embodiments]

### (Underlying Knowledge Forming the Basis of the Present Disclosure)

A description of a blockchain will be given first.

FIG. 1 is a diagram illustrating the concept of a blockchain.

Blockchain is a structure in which blocks, each of which is a recording unit, are connected in the form of a chain and recorded in a distributed ledger. FIG. 1 shows an example in which block B1 that was generated temporally after block B0 is connected to block B0, and block B2 that was generated temporally after block B1 is connected to block B1. That is, FIG. 1 shows an example of a blockchain in which blocks B0 to B3 are connected in the form of a chain.

FIG. 2 is a diagram illustrating a data structure of the blockchain shown in FIG. 1.

Each of the blocks included in the blockchain shown in FIG. 1 includes a plurality of transaction data items and the hash value of the immediately preceding block. Specifically, block B2 includes the hash value of block B1 that is the immediately preceding block. A hash value calculated from the plurality of transaction data items that are included in block B2 and the hash value of block B1 is included in block B3 as the hash value of block B2.

As described above, in the blockchain technology, blocks are connected in the form of a chain, with each block including the content of the preceding block as a hash value, whereby tampering of the connected transaction data can be effectively prevented. This is because, if a change is made to past transaction data, the hash value of the block takes a value different from the value before the change was made. In order to make the tampered block to appear to be the correct block, all of the blocks after the tampered block must be reconstructed, and this operation is practically very difficult to perform. Accordingly, it is in fact impossible to perform tampering. Furthermore, distributed ledgers in which a blockchain is recorded are provided at a plurality of physically different locations, and thus even if one of the ledgers is tampered, the tampering can be detected based on the other ledgers. From this viewpoint as well, it is in fact impossible to perform tampering on the blockchain.

Next, processing performed at a time interval of block generation, or in other words, the processing of generating a block and connecting (writing) the block to a blockchain will be described with reference to the drawings. The processing of generating a block and writing the block into a blockchain corresponds to the processing of generating a block of a blockchain and recording the block into a distributed ledger.

FIG. 3 is a diagram illustrating processing performed at a time interval of block generation of the blockchain shown in FIG. 1. In FIG. 3, each transaction data is represented as Tx data, each transaction pool is represented as Tx pool. In FIG. 3, the time interval of block generation is set to, for example, the length of time from when block B1 is connected to block B0 of the blockchain to when block B2 that is the block next to block B1 is connected.

The transaction pools are storages in which unverified transactions (transaction data) in the blockchain are stored. As shown in FIG. 3, each transaction pool stores a plurality of unverified transaction data items acquired from one or more users.

A consensus algorithm is a rule for selecting a "representative" that can write a block into the blockchain, and is also called "consensus forming algorithm". It takes time to execute the consensus algorithm, and thus the time interval of block generation is defined as the time from the start of execution of the consensus algorithm to the end of execution of the consensus algorithm.

The consensus algorithm is executed on one or more transaction data items selected from the transaction pool by the start of execution of the consensus algorithm. After the consensus algorithm has been executed, the block is written into the blockchain. If the block has a capacity enough to include all transaction data items stored in the transaction pool, the consensus algorithm may be executed on all transaction data items stored in the transaction pool.

FIG. 4 is an example of a flowchart illustrating processing performed by the consensus algorithm shown in FIG. 3 being executed.

When execution of the consensus algorithm starts, first, verification is performed on one or more transaction data items selected from the transaction pool (S91). Here, the correctness of the one or more transaction data items is verified.

Next, a block that includes the one or more transaction data items is generated (S92), and written into the blockchain (S93). In the following description, the expression "a new block is written into the blockchain" may also be expressed as "a new block is recorded in distributed ledgers".

As described above, the time interval of block generation is defined by the time required to execute the consensus algorithm. In the bitcoin disclosed in NPL 1, it takes about 10 minutes to execute the consensus algorithm, and thus the time interval of block generation is set to about 10 minutes.

Also, a transaction data item selected from the transaction pool that stores transaction data items that have been transmitted so as to be written into the blockchain is written into the blockchain described above.

In the blockchain described above, depending on the time interval of block generation, a plurality of transaction data items transmitted at a plurality of points in time from the same user or the same business operator are stored in the transaction pool. That is, a plurality of transaction data items transmitted at a plurality of points in time from the same user or the same business operator may be included in one block.

However, there may be a case where it is meaningless to include, in one block, a plurality of transaction data items transmitted at a plurality of points in time from the same user or the same business operator, depending on the type of information included in the transaction data items. In this case, unnecessary transaction data that is not used remains recorded into the block of the blockchain. As a result, not only a limited network bandwidth is wasted, but also resources including electric power for block generation and the like are wasted.

Accordingly a control method according to an aspect of the present disclosure is a control method executed by a device in a system including the device and a plurality of servers that are communicably connected to the device, the plurality of servers recording, every predetermined timing, a transaction data item selected from among transaction data items stored by the predetermined timing into a distributed ledger by incorporating the transaction data item into a block, the control method including: generating first transaction data that includes latest information acquired by a first time, and transmitting the first transaction data to a first server that is one of the plurality of servers; checking content of the block recorded in the distributed ledger of the first server at a second time that happens one or more times after the first time to determine, when second transaction data next to the first transaction data is generated at the second time, whether a first block that is included when the first transaction data is recorded into the distributed ledger is different from a second block that is included when the second transaction data is recorded into the distributed ledger; and when it is determined that the first block is different from the second block, generating, at the second time or thereafter, the second transaction data that includes latest information acquired after the first time, and transmitting the second transaction data to the first server.

As described above, one device, or in other words, the same user or the same business operator checks the content of the block recorded in the distributed ledger, and then transmits one transaction data item that includes latest information. By doing so, a block recorded into the distributed ledger includes only one transaction data item transmitted by one device. Accordingly, a situation can be suppressed in which unnecessary transaction data that is not used is recorded into the block, and thus the waste of network bandwidth and resources can be suppressed.

Also, the checking of the content of the block may include checking the content of the block to determine whether the block includes third transaction data generated directly previous to the first transaction data.

With this configuration, each block recorded into the distributed ledger includes only one transaction data item transmitted by one device. Accordingly, it is possible to suppress not only a situation in which a block that includes transaction data that is not used is recorded into the distributed ledger, but also a situation in which a block that is regarded as an empty block by the device is recorded into the distributed ledger. Accordingly, the waste of network bandwidth and resources can be further suppressed.

Here, furthermore, the control method further includes: acquiring a received data-item count and a processable data-item count, the received data-item count being a total number of transaction data items received per unit time by the first server, and the processable data-item count being a number of transaction data items that can be processed per unit time by the first server when recording into the distributed ledger. When the processable data-item count is greater than or equal to a threshold value that is set based on the received data-item count, the content of the block may be checked to determine whether the block includes the third transaction data.

With this configuration, each block recorded into the distributed ledger can include only one transaction data item transmitted by one device according to the processing power of the first server.

Also, the checking of the content of the block may include checking the content of the block to determine whether the block includes the first transaction data.

With this configuration, a block that is regarded as an empty block by the one device may be generated, but a block that is not regarded as an empty block recorded into the distributed ledger includes only one transaction data item transmitted by the one device. Accordingly, unnecessary transaction data that is not used can be prevented from being recorded into the block, and thus the waste of network bandwidth and resources can be suppressed.

Here, furthermore, the control method may further include: acquiring a received data-item count and a processable data-item count, the received data-item count being a total number of transaction data items received per unit time by the first server, and the processable data-item count being a number of transaction data items that can be processed per unit time by the first server when recording into the distributed ledger. When the processable data-item count is less than a threshold value that is set based on the received data-item count, the content of the block may be checked to determine whether the block includes the first transaction data.

With this configuration, a block recorded into the distributed ledger can include only one transaction data item transmitted by one device according to the processing power of the first server.

Also, a data generation device according to an aspect of the present disclosure is a data generation device that is communicably connected to a plurality of servers that record, every predetermined timing, a transaction data item selected from among transaction data items stored by the predetermined timing into a distributed ledger by incorporating the transaction data item into a block, the data generation device including: a processor; and a memory, wherein the processor generates first transaction data that includes latest information acquired by a first time, and transmits the first transaction data to a first server that is one of the plurality of servers, the processor checks content of a block recorded in the distributed ledger of the first server at a second time that happens one or more times after the first time to determine, when second transaction data next to the first transaction data is generated at the second time, whether a first block that is included when the first transaction data is recorded into the distributed ledger is different from a second block that is included when the second transaction data is recorded into the distributed ledger; and when it is determined that the first block is different from the second block, the processor generates, at the second time or thereafter, the second transaction data that includes latest information acquired after the first time, and transmits the second transaction data to the first server.

Hereinafter, an embodiment will be described with reference to the drawings. The embodiment described below shows a specific preferred example of the present disclosure. That is, the numerical values, shapes, materials, structural elements, the arrangement and connection of the structural elements, steps, the order of the steps, and the like shown in the following embodiment are merely examples, and therefore are not intended to limit the scope of the present disclosure. The present disclosure is defined by the appended claims. Accordingly, among the structural elements described in the following embodiment, structural elements not recited in any one of the independent claims are described as structural elements that are not necessarily required to address the problem of the present disclosure, but constitute a preferred embodiment.

### Embodiment

Hereinafter, a control system according to an embodiment will be described with reference to the drawings.

In the control system according to the present disclosure, subsequent transaction data is transmitted according to the result of checking the content of the block recorded in the latest distributed ledger. With this configuration, in the case where information is periodically recorded in the distributed ledger, but only latest information is used without referencing to past information recorded into the distributed ledger, a block recorded into the distributed ledger includes only one transaction data item that includes latest information that may be used.

### [Configuration of Control System]

FIG. 5 is a diagram schematically showing a configuration of the control system according to the present embodiment.

As shown in FIG. 5, the control system includes device 100 and authentication server devices 210, 220, and 230. These are communicably connected. The communication performed therebetween may be performed through any one of a wired Internet line, wireless communication, dedicated communication, and the like.

FIG. 5 shows an example in which the control system according to the present embodiment includes three servers and one device, but the configuration is not limited thereto. That is, the control system according to the present embodiment may include four or more authentication server devices and two or more devices. As will be described later, the one device may represent a device that is used by one user or one business operator, and may be a device that has a server function.

### [Device 100]

Device 100 represents a device that is used by one user or one business operator. Device 100 may have a server function.

FIG. 6 is a block diagram schematically showing a configuration of device 100 according to the present embodiment.

Device 100 includes a processor and a memory in which a predetermined program that causes the processor to execute predetermined processing is stored. That is, device 100 is implemented by the processor executing the predetermined program by using the memory. In the present embodiment, device 100 includes sensor information acquirer 101, transaction data generator 102, transaction data checker 103, checking method determiner 104, and communicator 105. Checking method determiner 104 is not an essential structural element, and may not be included in device 100. The above-described structural elements will be described below one by one.

### <Sensor Information Acquirer 101>

Sensor information acquirer 101 periodically acquires information (sensor information) from a sensor incorporated in an IoT (Internet of Things) device (not shown). That is, sensor information acquirer 101 periodically acquires latest sensor information (hereinafter also referred to as "latest information"). Here, the sensor information is, for example, weather information or biological information, but the sensor information is not limited thereto. The sensor information may be data acquired directly from the sensor, or may be data acquired from, for example, the Internet via the sensor. Also, the sensor information may be data that is acquired from the Internet and periodically updated or added.

### <Transaction Data Generator 102>

Transaction data generator 102 generates transaction data based on the result of checking performed by transaction data checker 103. Transaction data generator 102 transmits the generated transaction data to at least one of authentication server devices 210, 220, and 230 via communicator 105.

More specifically, it is assumed that transaction data generator 102 generates first transaction data that includes latest information acquired by sensor information acquirer 101 by a first time, and transmits the generated first transaction data to, for example, authentication server device 210. In this case, transaction data generator 102 generates second transaction data that includes latest information acquired after the first time according to the content of the block recorded in the latest distributed ledger by transaction data checker 103. Then, transaction data generator 102 transmits the generated second transaction data to authentication server device 210.

### <Transaction Data Checker 103>

Transaction data checker 103 checks whether the block recorded in the latest distributed ledger includes previous transaction data or second previous transaction data generated and transmitted by transaction data generator 102. By checking the content of the block recorded in the latest distributed ledger, it is possible to determine the timing at which transaction data that is to be generated next by transaction data generator 102 is recorded in a block that is different from the block in which the transaction data generated previously is recorded.

More specifically, transaction data checker 103 determines whether a first block and a second block are different by checking the content of the block recorded in the distributed ledger at a second time that happens one or more times after the first time.

Here, a block included when first transaction data is recorded into the distributed ledger is referred to as "first block". A block included when second transaction data is recorded into the distributed ledger at a second time at which the second transaction data is generated next to the first transaction data is referred to as "second block".

Then, if it is determined that the first block and the second block are different, transaction data checker 103 causes transaction data generator 102 to generate, at the second time or thereafter, second transaction data that includes latest information acquired after the first time.

Here, transaction data checker 103 may check the content of the block recorded in the latest distributed ledger, and determine, for example, whether the block includes third transaction data that is the directly previous transaction data generated directly previous to the first transaction data. Then, if it is determined that the block includes third transaction data, transaction data checker 103 may cause transaction data generator 102 to generate second transaction data. With this configuration, each block recorded into the distributed ledger includes only one second transaction data generated by device 100.

Also, transaction data checker 103 may check the content of the block recorded in the latest distributed ledger, and determine, for example, the block includes first transaction data. Then, if it is determined that the block includes first transaction data, transaction data checker 103 may cause transaction data generator 102 to generate second transaction data. With this configuration, a situation may occur in which an empty block that does not include second transaction data is recorded into the distributed ledger, but a block that is not an empty block recorded into the distributed ledger includes only one second transaction data generated by device 100.

### <Checking Method Determiner 104>

Checking method determiner 104 may determine the method for checking the content of the block recorded in the latest distributed ledger performed by transaction data checker 103 according to the processing power of authentication server device 210.

More specifically, checking method determiner 104 acquires the received data-item count that is the total number of transaction data items that are received per unit time by the first server and the processable data-item count that is the total number of transaction data items that can be processed per unit time by the first server when recording into the distributed ledger.

If the processable data-item count is greater than or equal to a threshold value set based on the received data-item count, checking method determiner 104 may cause transaction data checker 103 to check the content of the block recorded in the latest distributed ledger and determine whether the block includes third transaction data.

If the processable data-item count is less than the threshold value set based on the received data-item count, checking method determiner 104 may cause transaction data checker 103 to check the content of the block recorded in the latest distributed ledger and determine whether the block includes first transaction data.

Through the foregoing, checking method determiner 104 can cause transaction data checker 103 to determine whether the block recorded in the latest distributed ledger includes previous transaction data or second previous transaction data generated and transmitted by transaction data generator 102.

The number of transaction data items transmitted from a plurality of devices including device 100 does not necessarily need to be the exact number obtained by inquiring authentication server device 210 or the like, and may be a rough number enough to perform the above-described confirmation. Also, the processable data-item count per unit time is set in advance in each device such as authentication server device 210.

### <Communicator 105>

Communicator 105 performs communication with authentication server devices 210, 220, and 230.

In the present embodiment, communicator 105 transmits the transaction data generated by transaction data generator 102 to at least one of authentication server devices 210, 220, and 230. Also, communicator 105 may acquire the received data-item count and the processable data-item count as the processing power of authentication server devices 210, 220, and 230, and transmit the received data-item count and the processable data-item count to checking method determiner 104. Also, communicator 105 may acquire the content of the latest distributed ledgers of authentication server devices 210, 220, and 230, and transmit to transaction data checker 103.

### [Hardware Configuration of Device 100]

A hardware configuration of device 100 according to the present embodiment will be described next with reference to FIG. 7. FIG. 7 is a diagram showing an example of a hardware configuration of computer 1000 that implements the functions of device 100 according to the present embodiment by using software.

As shown in FIG. 7, computer 1000 is a computer that includes input device 1001, output device 1002, CPU 1003, built-in storage 1004, RAM 1005, reading device 1007, transmission reception device 1008, and bus 1009. Input device 1001, output device 1002, CPU 1003, built-in storage 1004, RAM 1005, reading device 1007, and transmission reception device 1008 are connected by bus 1009.

Input device 1001 is a device that serves as a user interface such as an input button, a touch pad, or a touch panel display, and receives user operations. Input device 1001 may be configured to receive not only user's contact operations, but also voice operations and remote operations using a remote controller or the like.

Built-in storage 1004 is a flash memory or the like. At least one of a program for implementing the functions of device 100 and an application that uses the functional configuration of device 100 may be stored in advance in built-in storage 1004.

RAM 1005 is a random access memory, and is used to store data and the like when the program or the application is executed.

Reading device 1007 reads information from a recording medium such as a USB (Universal Serial Bus) memory. Reading device 1007 reads, from the recording medium in which the program and the application described above are recorded, the program or the application, and stores the program or the application in built-in storage 1004.

Transmission reception device 1008 is a communication circuit for performing wireless or wired communication. Transmission reception device 1008 performs communication with, for example, a server device connected to the network, downloads the program or the application described above from the server device, and stores the program or the application in built-in storage 1004.

CPU 1003 is a central processing unit that copies the program or the application stored in built-in storage 1004 into RAM 1005, and sequentially reads instructions that are included in the program or the application from RAM 1005, and executes the instructions.

Next, authentication server device 210 will be described.

### [Authentication Server Device 210]

Authentication server devices 210, 220, and 230 have the same configuration, and thus a description will be given of authentication server device 210 as an example.

FIG. 8 is a block diagram showing a functional configuration of authentication server device 210 according to the present embodiment.

Authentication server device 210 is communicably connected to device 100. Every predetermined timing, authentication server device 210 records, into the distributed ledger, a transaction data item selected from among transaction data items stored by the predetermined timing by including the transaction data item in a block. Authentication server device 210 is an example of a first server that records into the distributed ledger.

In the present embodiment, as shown in FIG. 8, authentication server device 210 includes transaction data storage 211, transaction data verifier 212, ledger storage 213, and communicator 214. Authentication server device 210 may be implemented by a processor executing a predetermined program by using a memory. The structural elements will be described below one by one.

### <Transaction Data Storage 211>

Transaction data storage 211 functions as a transaction pool in which unverified transaction data of the blockchain is stored.

In the present embodiment, transaction data storage 211 temporarily stores, for example, first transaction data, second transaction data, or third transaction data acquired from device 100. Transaction data storage 211 deletes a transaction data item that was selected from the stored transaction data items and written into the distributed ledger, or discards a transaction data item that is no longer necessary.

When transaction data storage 211 acquires a transaction data item from device 100, transaction data storage 211 may verify the electronic signature included in the transaction data item and the correctness of the transaction data item. Then, transaction data storage 211 may store the transaction data item acquired from device 100 only when the transaction data item acquired from device 100 is successfully verified. This varication process may be skipped.

### <Transaction Data Verifier 212>

Transaction data verifier 212 verifies the correctness of the transaction data item selected from among the transaction data items stored in transaction data storage 211 by executing a consensus algorithm.

Here, as the consensus algorithm, PBFT (Practical Byzantine Fault Tolerance) may be used, or any other known consensus algorithms may be used. Examples of known consensus algorithms include POW (Proof Of Work), POS (Proof Of Stake), and the like. In the case where PBFT is used as the consensus algorithm, transaction data verifier 212 receives, from each of a plurality of other authentication server devices 220 and 230, a report indicating whether the transaction data item has been successfully verified, and then determines whether the number of reports has exceeded a predetermined number. Then, if it is determined that the number of reports has exceeded the predetermined number, transaction data verifier 212 may determine that the correctness of the transaction data item has been verified by the consensus algorithm.

### <Ledger Storage 213>

Ledger storage 213 is a processor that stores, into the distributed ledger, new transaction data that needs to be stored in the distributed ledger.

In the present embodiment, ledger storage 213 generates a block that includes the transaction data item whose correctness has been verified by transaction data verifier 212, and stores the generated block into the distributed ledger. In other words, ledger storage 213 generates a block that includes the transaction data item whose correctness has been verified by transaction data verifier 212, and writes the generated block into the blockchain stored in the distributed ledger.

### <Communicator 214>

Communicator 214 performs communication with authentication server devices 220 and 230, and also performs communication with device 100.

In the present embodiment, communicator 214 transmits transaction data to be verified by transaction data verifier 212 to authentication server devices 220 and 230. Also, communicator 214 may perform communication with device 100 to acquire transaction data and transmit the received data-item count and the processable data-item count to device 100 as the processing power of authentication server device 210. Also, communicator 214 may transmit the content of the distributed ledger included in authentication server device 210 to device 100.

### [Operations]

Next, the operations of device 100 included in the control system configured as described above will be described.

FIG. 9 is a flowchart illustrating the operations of device 100 according to the present embodiment.

FIG. 9 shows operations, performed by device 100, such that one or more transaction data items included in a block recorded in the distributed ledger includes only one transaction data to be transmitted by device 100.

First, device 100 generates first transaction data that includes latest information acquired by a first time, and transmits the first transaction data to a first server (S10). As described above, the first server corresponds to, for example, authentication server device 210.

Next, device 100 checks the content of the block recorded in the distributed ledger of the first server at a second time that is after the first time (S11). More specifically, device 100 checks the content of the block recorded in the distributed ledger, and determines whether second transaction data is to be included in a block different from the block in which the first transaction data is included, when device 100 generates the second transaction data next to the first transaction data at the second time.

If it is determined that the second transaction data is to be included in a block different from the block in which the first transaction data is included when the second transaction data is generated at the second time (YES in S12), device 100 generates second transaction data that includes latest information acquired after the first time, and transmits the second transaction data to the first server (S13). In the present embodiment, device 100 generates second transaction data during a period from the second time to the end of execution of the consensus algorithm executed during the second time, and transmits the second transaction data to the first server.

If it is determined that the second transaction data is to be included in the same block as the block in which the first transaction data is included when the second transaction data is generated at the second time (No in S12), device 100 returns to step S11, where device 100 performs the processing again.

### (Example 1)

Next, processing performed by the control system when device 100 checks the content of the block recorded in the latest distributed ledger, and determines whether the block includes second previous transaction data that device 100 transmitted will be described as Example 1.

FIG. 10 is a sequence diagram of processing performed by the control system according to Example 1. FIG. 10 shows an example of processing performed by the control system after S11 shown in FIG. 9.

Here, it is assumed that device 100 has generated first transaction data that includes latest information acquired by a first time and transmitted to the first transaction data to authentication server devices 210, 220, and 230, and authentication server devices 210, 220, and 230 have pooled (stored) at least the first transaction data.

Next, device 100 checks the latest distributed ledger of authentication server device 210 at a second time that is after the first time (S21). In the present example, device 100 checks the latest distributed ledger by, for example, transmitting a request for the latest distributed ledger to authentication server device 210, and acquiring the latest distributed ledger transmitted from authentication server device 210.

Next, device 100 references to (checks) the block included in the latest distributed ledger acquired, and determines whether the block included in the latest distributed ledger includes third transaction data that is the second previous transaction data that device 100 transmitted (S22). Here, the directly previous transaction data that device 100 transmitted is referred to as "first transaction data". Likewise, the second previous transaction data that device 100 transmitted, or in other words, the directly previous transaction data that device 100 transmitted directly previous to the first transaction data is referred to as "third transaction data". In other words, the directly previous transaction data that device 100 transmitted relative to the second transaction data to be generated and transmitted by device 100 hereafter (at the second time or thereafter) is referred to as "first transaction data". Likewise, the second previous transaction data that device 100 transmitted relative to the second transmission data to be transmitted by device 100 hereafter is referred to as "third transaction data".

If it is determined in step S22 that the latest distributed ledger includes third transaction data that is the second previous transaction data that device 100 transmitted (YES in S22), device 100 generates second transaction data that includes latest information acquired after the first time (S23). If it is determined in step S22 that the latest distributed ledger does not include third transaction data that is the second previous transaction data that device 100 transmitted (NO in S22), device 100 returns to step S21, where device 100 performs the processing again.

Next, device 100 transmits the second transaction data generated in step S23 to authentication server devices 210, 220, and 230 (S24).

Then, each of authentication server devices 210, 220, and 230 pools (stores) the second transaction data acquired from device 100 (S25).

### (Example 2)

Next, processing performed by device 100 to determine a method for checking the content of the block recorded in the latest distributed ledger of authentication server device 210 according to the processing power of authentication server device 210 will be described as Example 2. Also, in the present example, the method for checking the content of the block will be described as a method for determining whether the block recorded in the latest distributed ledger includes the second previous transaction data or the directly previous transaction data that device 100 transmitted.

FIG. 11 is a flowchart illustrating the processing performed by device 100 according to Example 2.

It is assumed that, prior to step S31, which will be described below, device 100 generates first transaction data that includes latest information acquired by a first time, and transmits the first transaction data to authentication server device 210, and authentication server device 210 pools (stores) at least the first transaction data.

First, device 100 acquires, from authentication server device 210, the processable data-item count and the received data-item count per unit time by authentication server device 210 (S31).

Next, device 100 determines whether the processable data-item count acquired in step S31 is greater than or equal to a threshold value (or in other words, processable data-item count ≥ threshold value) (S32). The threshold value used here is determined by device 100 based on the received data-item count that was acquired in step S31, and may be set to, for example, about several percent to several tens percent of the received data-item count.

If it is determined in step S32 that the processable data-item count is less than the threshold value (NO in S32), device 100 checks the latest distributed ledger of authentication server device 210 at a second time that is after the first time (S33). In the present example as well, device 100 checks the latest distributed ledger by, for example, transmitting a request for the latest distributed ledger to authentication server device 210, and acquiring the latest distributed ledger transmitted from authentication server device 210.

On the other hand, if it is determined in step S32 that the processable data-item count is greater than or equal to the threshold value (YES in S32), the procedure advances to step S33. The processing after this step, or in other words, the processing in steps S33, S35, and S36 is the same as the processing in steps S21 to S24 shown in FIG. 10, and thus a description thereof is omitted here.

Here, an example has been described in which device 100 generates first transaction data that includes latest information and transmits the first transaction data to authentication server device 210 prior to step S31, but the configuration is not limited thereto. Device 100 may generate first transaction data that includes latest information and transmit the first transaction data to authentication server device 210 during a period after steps S31 and S32 and before step S33.

### [Advantageous Effects, etc.]

With the control system and the like of the embodiment described above, one device 100, or in other words, the same user or the same business operator checks the content of the block recorded in the distributed ledger, and thereafter transmits one transaction data item that includes latest information. In other words, in the control system and the like of the embodiment, device 100 transmits transaction data one by one using ASK instead of PUSH. With this configuration, for device 100, a block recorded into the distributed ledger includes only one transaction data item transmitted by one device 100. Accordingly, unnecessary transaction data that is not used can be prevented from being recorded into the block, and thus the waste of network bandwidth and resources can be suppressed.

Here, advantageous effects of the embodiment will be described with reference to FIGS. 12 to 14. FIGS. 12 and 13 are flow diagrams illustrating the advantageous effects of the embodiment. FIG. 14 is a diagram illustrating the flow diagram shown in FIG. 13 from another viewpoint.

First, an example will be described in which device 100 generates second transaction data and transmits the second transaction data, after determining whether first transaction data generated directly previous to the second transaction data to be generated next is included in the block recorded in the latest distributed ledger, with reference to FIG. 12.

In FIG. 12, first transaction data is represented by Txₙ₋₁, and second transaction data is represented by Txₙ. Also, a period during which the consensus algorithm is executed is represented by consensus. The period during which the consensus algorithm is executed is a period required to write the block into the blockchain. The blockchain shown in FIG. 12 shows that the consensus algorithm is executed on transaction data that was transmitted before the start of execution of the consensus algorithm, and the transaction data is included in a block and written into the blockchain after the end of execution of the consensus algorithm. The transaction data transmitted before the start of execution of the consensus algorithm is stored in the transaction pool.

As shown in FIG. 12, device 100 may periodically check and determine whether generated and transmitted Txₙ₋₁ is included in the block written in the blockchain. In this case, if it is determined that Txₙ₋₁ is included in the block written in the blockchain, device 100 generates and transmits Txₙ. Then, consecutive blocks do not include transaction data generated and transmitted by device 100 (blocks that are regarded as empty blocks by device 100 are generated). However, a block that is not regarded as an empty block by device 100 includes only one transaction data generated and transmitted by device 100.

That is, device 100 may determine whether the block written in the blockchain includes previous transaction data transmitted by device 100, and then transmit subsequent transaction data. With this configuration, device 100 can prevent two or more transaction data items transmitted by device 100 from being included in one block although blocks that are regarded as empty blocks by device 100 may be generated and written into the blockchain.

As described above, blocks that are regarded as empty blocks by device 100 may be recorded into the distributed ledger, but only one transaction data item transmitted by device 100 is included in one block recorded into the distributed ledger.

Accordingly, unnecessary transaction data that is not used can be prevented from being recorded into the block, and thus the waste of network bandwidth and resources can be suppressed.

Next, an example will be described in which device 100 generates second transaction data and transmits the second transaction data, after determining whether third transaction data that is the second previous transaction data that device 100 generated previous to the second transaction data to be generated next is included in the block recorded in the latest distributed ledger, with reference to FIGS. 13 and 14. Here, in FIGS. 13 and 14, first transaction data is the directly previous transaction data generated directly previous to second transaction data to be generated next, and is represented by Txₙ₋₁. Likewise, the second transaction data is represented by Txₙ, and third transaction data that is the directly previous transaction data generated directly previous to the first transaction data is represented by Txₙ₋₂. Likewise, transaction data to be generated next to the second transaction data is represented by Txₙ₊₁.

As shown in FIGS. 13 and 14, in order to check the generation and transmission timing of Txₙ, device 100 determines whether Txₙ₋₂ is included in the block written in the blockchain after transmission of Txₙ₋₁. Then, if it is determined that Txₙ₋₂ is included in the block written in the blockchain, device 100 generates and transmits Txₙ.

Next, in order to check the generation and transmission timing of Txₙ₊₁, device 100 determines whether Txₙ₋₁ is included in the block written in the blockchain after transmission of Txₙ. When it is determined that the block written in the blockchain includes Txₙ₋₁, device 100 generates and transmits Txₙ₊₁. For this reason, transaction data generated and transmitted by device 100 is included in consecutive blocks (blocks that are regarded as empty blocks by device 100 are not generated).

As described above, after device 100 has determined whether the block written in the blockchain includes the second previous transaction data that device 100 transmitted, device 100 transmits subsequent transaction data. With this configuration, for device 100, only one transaction data that device 100 generated and transmitted is included in a block. That is, it is possible to prevent two or more transaction data items transmitted by device 100 from being included in a block. Also, for device 100, each block includes only one transaction data generated and transmitted by device 100, and it is therefore possible to prevent blocks that are regarded as empty blocks by device 100 from being generated.

In other words, it is possible to not only prevent one or more transaction data items that are not used from being included into a block and then recorded into the distributed ledger, but also prevent blocks that are regarded as empty blocks by the device from being recorded into the distributed ledger. Accordingly, the waste of network bandwidth and resources can be further suppressed.

Also, device 100 may determine whether the block recorded in the latest distributed ledger includes first transaction data or third transaction data that is the directly previous transaction data generated directly previous to the first transaction data according to the processing power of the authentication server device that has the distributed ledger. With this configuration, it is possible to select whether to permit a block that is regarded as an empty block by device 100 to be recorded into the distributed ledger according to the processing power of the authentication server device.

### [Other Variations]

The present disclosure has been described by way of the embodiment, but the present disclosure is of course not limited to the embodiment given above. The present disclosure also encompasses the following variations.

(1) Each of the devices according to the embodiment given above is specifically a computer system that includes a microprocessor, a ROM, a RAM, a hard disk unit, a display unit, a keyboard, a mouse, and the like. In the RAM or the hard disk unit, a computer program is recorded. Each device implements the functions as a result of the microprocessor operating in accordance with the computer program. Here, the computer program is composed of a combination of a plurality of instruction codes that indicate instructions for the computer to implement predetermined functions.
(2) Some or all of the structural elements that constitute each of the devices according to the embodiment given above may be composed of a single system LSI (Large Scale Integration). The system LSI is a super multifunctional LSI manufactured by integrating a plurality of structural elements on a single chip, and is specifically a computer system that includes a microprocessor, a ROM, a RAM, and the like. A computer program is stored in the RAM. As a result of the microprocessor operating in accordance with the computer program, the system LSI implements the functions.

Also, the units of the structural elements that constitute each of the devices according to the embodiment given above may be configured as individual single chips, or a part or all of them may be configured in a single chip.

Also, a system LSI is used here, but the LSI may be called IC, LSI, super LSI, or ultra LSI according to the degree of integration. Also, implementation of an integrated circuit is not limited to an LSI, and may be implemented by a dedicated circuit or a general-purpose processor. It is also possible to use an FPGA (Field Programmable Gate Array) that can be programmed after LSI production or a reconfigurable processor that enables reconfiguration of the connection and setting of circuit cells in the LSI.

Furthermore, if a technique for implementing an integrated circuit that can replace LSIs appears by another technique resulting from the progress or derivation of semiconductor technology, the functional blocks may be integrated by using that technique. Application of biotechnology or the like is possible.

(3) Some or all of the structural elements that constitute each of the devices described above may be composed of an IC card or a single module that can be attached and detached to and from the device. The IC card or the module is a computer system that includes a microprocessor, a ROM, a RAM, and the like. The IC card or the module may include the above-described super multifunctional LSI. The functions of the IC card or the module are implemented as a result of the microprocessor operating in accordance with a computer program. The IC card or the module may have tamper resistance.

(4) The present disclosure may be any of the methods described above. Alternatively, the present disclosure may be a computer program that implements the methods by using a computer, or may be a digital signal generated by the computer program.

Also, the present disclosure may be implemented by recording the computer program or the digital signal in a computer readable recording medium such as, for example, a flexible disk, a hard disk, a CD-ROM, a MO, a DVD, a DVD-ROM, a DVD-RAM, a BD (Blu-ray^{®} Disc), or a semiconductor memory. Also, the present disclosure may be the digital signal recorded into the recording medium.

Also, the present disclosure may be implemented by transmitting the computer program or the digital signal via a telecommunication line, a wireless or wired communication line, a network as typified by the Internet, data broadcasting, or the like.

Also, the present disclosure is a computer system that includes a microprocessor and a memory, wherein the computer program may be recorded in the memory, and the microprocessor may operate in accordance with the computer program.

Also, the present disclosure may be implemented by another independent computer system by recording the program or the digital signal on any of the recording media described above and transferring the program or the digital signal, or by transferring the program or the digital signal via the network described above or the like.

(5) The embodiment and variations given above may be combined.

### [Industrial Applicability]

The present disclosure is applicable to a control method for controlling transaction data recorded into a distributed ledger and a data generation device, and more particularly to a control method for controlling transaction data recorded in a distributed ledger, wherein latest information is periodically recorded into the distributed ledger, but only the latest information is used without using past information, and a data generation device.

### [Reference Signs List]

- 100: device
- 101: sensor information acquirer
- 102: transaction data generator
- 103: transaction data checker
- 104: checking method determiner
- 105, 214: communicator
- 210, 220, 230: authentication server device
- 211: transaction data storage
- 212: transaction data verifier
- 213: ledger storage

## Claims

1. A control method executed by a device in a system including the device and a plurality of servers that are communicably connected to the device, the plurality of servers recording, every predetermined timing, a transaction data item selected from among transaction data items stored by the predetermined timing into a distributed ledger by incorporating the transaction data item into a block, the control method comprising:
generating first transaction data that includes latest information acquired by a first time, and transmitting the first transaction data to a first server that is one of the plurality of servers;
checking content of the block recorded in the distributed ledger of the first server at a second time that happens one or more times after the first time to determine, when second transaction data next to the first transaction data is generated at the second time, whether a first block that is included when the first transaction data is recorded into the distributed ledger is different from a second block that is included when the second transaction data is recorded into the distributed ledger; and
when it is determined that the first block is different from the second block, generating, at the second time or thereafter, the second transaction data that includes latest information acquired after the first time, and transmitting the second transaction data to the first server.

2. The control method according to claim 1,
wherein the checking of the content of the block includes checking the content of the block to determine whether the block includes third transaction data generated directly previous to the first transaction data.

3. The control method according to claim 2, further comprising:
acquiring a received data-item count and a processable data-item count, the received data-item count being a total number of transaction data items received per unit time by the first server, and the processable data-item count being a number of transaction data items that can be processed per unit time by the first server when recording into the distributed ledger,
wherein when the processable data-item count is greater than or equal to a threshold value that is set based on the received data-item count, checking the content of the block to determine whether the block includes the third transaction data.

4. The control method according to claim 1,
wherein the checking of the content of the block includes checking the content of the block to determine whether the block includes the first transaction data.

5. The control method according to claim 3 or 4, further comprising:
acquiring a received data-item count and a processable data-item count, the received data-item count being a total number of transaction data items received per unit time by the first server, and the processable data-item count being a number of transaction data items that can be processed per unit time by the first server when recording into the distributed ledger,
wherein when the processable data-item count is less than a threshold value that is set based on the received data-item count, checking the content of the block to determine whether the block includes the first transaction data.

6. A data generation device that is communicably connected to a plurality of servers that record, every predetermined timing, a transaction data item selected from among transaction data items stored by the predetermined timing into a distributed ledger by incorporating the transaction data item into a block, the data generation device comprising:
a processor; and
a memory,
wherein the processor generates first transaction data that includes latest information acquired by a first time, and transmits the first transaction data to a first server that is one of the plurality of servers,
the processor checks content of a block recorded in the distributed ledger of the first server at a second time that happens one or more times after the first time to determine, when second transaction data next to the first transaction data is generated at the second time, whether a first block that is included when the first transaction data is recorded into the distributed ledger is different from a second block that is included when the second transaction data is recorded into the distributed ledger; and
when it is determined that the first block is different from the second block, the processor generates, at the second time or thereafter, the second transaction data that includes latest information acquired after the first time, and transmits the second transaction data to the first server.

7. A program for causing a computer to execute a control method executed by a device in a system including the device and a plurality of servers that are communicably connected to the device, the plurality of servers recording, every predetermined timing, a transaction data item selected from among transaction data items stored by the predetermined timing into a distributed ledger by incorporating the transaction data item into a block, the control method comprising:
generating first transaction data that includes latest information acquired by a first time, and transmitting the first transaction data to a first server that is one of the plurality of servers;
checking content of the block recorded in the distributed ledger of the first server at a second time that happens one or more times after the first time to determine, when second transaction data next to the first transaction data is generated at the second time, whether a first block that is included when the first transaction data is recorded into the distributed ledger is different from a second block that is included when the second transaction data is recorded into the distributed ledger; and
when it is determined that the first block is different from the second block, generating, at the second time or thereafter, the second transaction data that includes latest information acquired after the first time, and transmitting the second transaction data to the first server.
